# EUROPÄISCHE PATENTSCHRIFT

(11) **EP 0 601 286 B1**
(45) Veröffentlichungstag und Bekanntmachung des Hinweises auf die Patenterteilung: **05.03.1997**
(21) Anmeldenummer: 93114456.2
(22) Anmeldetag: 09.09.1993
(51) Int. Cl.: B60J 5/04

(54) **Tür für ein Kraftfahrzeug**
Motor vehicle door
Porte pour véhicule automobile

(30) Priorität: 11.12.1992 DE 4241678
(43) Veröffentlichungstag der Anmeldung: 15.06.1994
(73) Patentinhaber: YMOS AKTIENGESELLSCHAFT Industrieprodukte, D-63179 Obertshausen (DE)
(72) Erfinder: Heim, Gunther, Dipl.-Ing., D-63179 Obertshausen (DE); Kroll, Bruno, Dipl.-Ing., D-42477 Radevormwald (DE)
(74) Vertreter: Schieferdecker, Lutz, Dipl.-Ing.

(56) Entgegenhaltungen:
- EP-A- 0 170 150
- EP-A- 0 222 990
- EP-A- 0 304 769
- EP-A- 0 493 774
- DE-A- 3 004 897

## Beschreibung

Die Erfindung betrifft eine Kraftfahrzeugtür mit den Merkmalen des Oberbegriffes des Anspruches 1.

Eine Kraftfahrzeugtür der genannten Art ist aus EP-A-0 170 150 bekannt. Sie besteht aus mehreren Hauptbestandteilen oder Modulen, wozu ein Funktionsmodul gehört, das einen tragenden Rahmen und der Türfunktion entsprechende Einbauteile aufweist. Ferner ist ein Außenmodul vorgesehen, das die Türaußenhaut und Befestigungsteile zum Verbinden mit dem Rahmen umfasst. Der Rahmen ist lösbar mit türseitigen Scharnierteilen verbindbar, die zusammen mit Karosseriescharnierteilen Türscharniere bilden, mit denen auch das Außenmodul an ein tragendes Teil der Karosserie angelenkt ist.

Obwohl bei dieser bekannten Kraftfahrzeugtür ein Funktionsmodul mit tragendem Türrahmen und ein Außenmodul als wesentliche Hauptbestandteile vorgesehen sind, dienen eine Innenwand mit Scheibe sowie ein Versteifungsbügel als eine gesonderte, weitere sowie vormontierte Untereinheit, die nachträglich, nämlich nach dem Lackieren, in die Tür eingebaut wird. Dies ist möglich, weil bei der bekannten Tür sowohl das Funktionsmodul mit den Scharnierteilen wie auch das Außenmodul mit eigenen Scharnierteilen versehen sind und die jeweiligen Scharnierteile mittels eines gemeinsamen Scharnierbolzens mit dem karosserieseitigen Scharnierteil verbindbar sind. Entsprechend lassen sich Funktionsmodul und Außenmodul buchdeckelartig auf- und zuschwenken.

Diese bekannte Ausbildung erfordert nicht nur besondere Scharnierteile und einen entsprechend langen Scharnierbolzen, sondern es können sich auch Nachteile bei späteren Reparaturen und Austauscharbeiten ergeben. Wenn beispielsweise unfallbedingt die Türaußenhaut bzw. das Außenmodul ausgetauscht werden muß, so ist es erforderlich, die Tür vollständig auszubauen, damit das Außenmodul mit seinen einstückig angeformten Scharnierteilen gelöst werden kann.

Demgegenüber liegt der Erfindung das Problem zugrunde, die Herstellung bzw. Erstmontage der Kraftfahrzeugtür nicht nur zu vereinfachen, sondern auch die Möglichkeit zu schaffen, damit vor allem Reparaturen der Tür bei Bagatellschäden weniger aufwendig und somit kostengünstiger sind als bisher.

Gelöst wird diese Aufgabe mit den Merkmalen des kennzeichnenden Teiles des Anspruches 1.

Da gemäß der Erfindung das Funktionsmodul und das Außenmodul jeweils für sich sowie getrennt lösbar mit gemeinsamen, türseitigen Scharnierteilen verbindbar sind, besteht z.B. bei der Fertigung des Kraftfahrzeuges die Möglichkeit, die Karosserie zusammen mit der Türaußenhaut zu lackieren, ohne daß bereits die für die Funktion der Tür wichtigen Teile eingebaut sind. Zum Vervollständigen der Tür muß dann lediglich noch das Funktionsmodul am Scharnier/an den Scharnieren befestigt und mit der Außenhaut bzw. dem Außenmodul verbunden werden. Gleichermaßen ist es möglich, z.B. nach einem Bagatellunfall nur die Außenhaut, d.h. das Türaußenblech, zu entfernen und durch ein neues zu ersetzen.

Ein weiterer Vorteil der erfindungsgemäßen Modulbauweise mit gesonderter Befestigung an dem bzw. den Scharnieren besteht darin, daß weitere Freiheitsgrade zum Justieren der Außenhaut gegeben sind und somit die Möglichkeit besteht, Fertigungstoleranzen besser als bisher zu beheben. Hierzu sind in Weiterbildung der Erfindung das Funktionsmodul und/oder das Außenmodul jeweils an dem bzw. den türseitigen Scharnierteilen des/der Scharniere justierbar.

Ferner sieht die Erfindung vor, daß das/ die türseitigen Scharnierteile mindestens zwei unabhängige Befestigungsmittel aufweisen, wobei ein Befestigungsmittel für das Funktionsmodul und das andere Befestigungsmittel für das Außenmodul vorgesehen sind.

Weitere Merkmale der Erfindung gehen aus Unteransprüchen im Zusammenhang mit der Zeichnung und der Beschreibung hervor.

Die Erfindung wird nachstehend anhand von Ausführungsbeispielen, die in der Zeichnung dargestellt sind, näher beschrieben. Dabei zeigen:
- Fig. 1:: eine perspektivische Ansicht von wesentlichen Teilen der Tür;
- Fig. 2:: in größerem Maßstab eine perspektivische Ansicht eines Scharnieres sowie von an diesem angeschlossenen, abgeschnittenen Teilen;
- Fig. 3:: einen Schnitt längs der Linie III-III in Fig. 2;
- Fig. 4:: eine Ansicht wie in Fig. 2 von einer abgewandelten Ausführungsform;
- Fig. 5:: eine Ansicht wie in den Figuren 2 und 4 von einer dritten Ausführungsform und
- Fig. 6:: einen Schnitt längs der Linie VI-VI in Fig.5

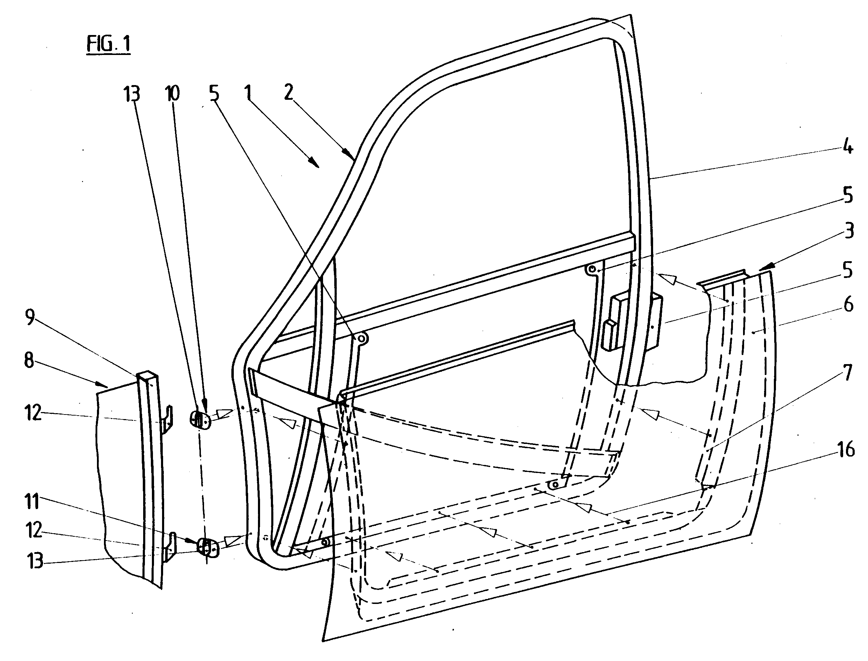

Eine Tür 1 für ein Kraftfahrzeug umfasst gemäß Fig. 1 ein Funktionsmodul 2 und ein Außenmodul 3. Das Funktionsmodul 2 besteht aus einem tragenden Rahmen 4 und verschiedenen, für die Funktion der Tür 1 notwendigen Einbauteilen 5. Zu dem Außenmodul 3 gehören eine Außenhaut 6 und zumindest die zu ihrer Befestigung am Rahmen 4 dienenden Teile 7.

Von der Karosserie 8 sind in Fig. 1 nur ein Blech und ein tragendes Teil 9, nämlich eine A-Säule dargestellt. An ihr sind von den beiden Scharnieren 1o und 11 jeweils die karosserieseitigen Scharnierteil 12 befestigt. Die zugehörigen türseitigen Scharnierteile 13 weisen je mindestens zwei getrennte, unabhängige Befestigungsmittel 14 auf, wobei das eine Befestigungsmittel 14 für das Funktionsmodul 2 und das andere Befestigungsmittel 14 für das Aussenmodul 3 vorgesehen sind. Dadurch sind das Funktionsmodul 2 und das Aussenmodul 3 jeweils an dem bzw. den Scharnieren 1o, 11 in getrennter Art und Weise sowie unabhängig voneinader befestigbar.

Die Art der Befestigung von Funktionsmodul 2 und Außenmodul 3 an den türseitigen Scharnierteilen 13 ist ferner in der Weise vorgesehen, daß sie auch wieder von den Scharnierteilen 13 abgenommen werden können. Zweckmäßigerweise dienen daher Schrauben 15 zum lösbaren Befestigen der Module 2, 3 an den türseitigen Scharnierteilen 13.

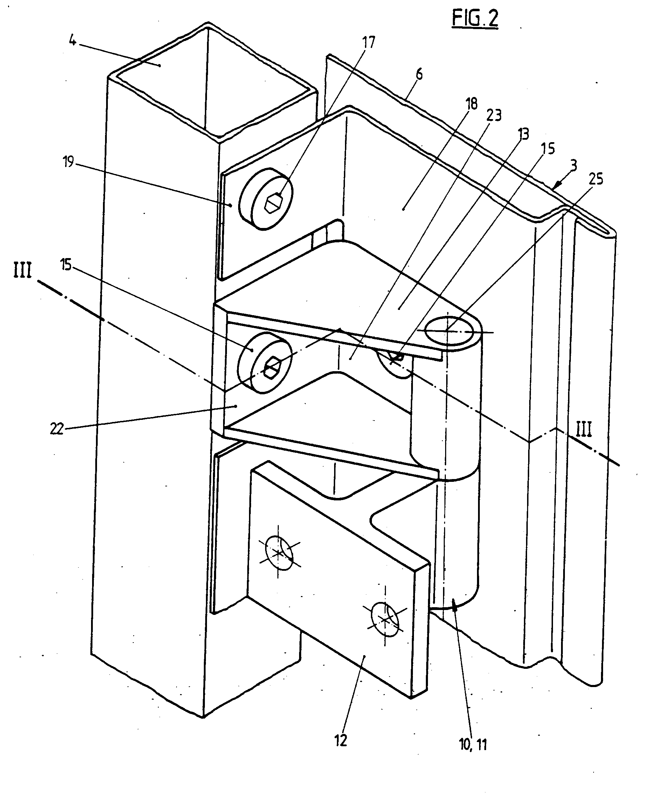

Ferner sind Maßnahmen vorgesehen, damit das Außenmodul 3 am Funktionsmodul 2 in lösbarer Weise befestigbar ist. Auch dies geschieht zweckmäßigerweise mit Hilfe von Schrauben entsprechend den Pfeilen 16 in Fig. 1 bzw. mit Schrauben 17 gemäß dem in Fig. 2 dargestellten Ausführungsbeispiel. Hierzu weist die Außenhaut 6 des Außenmoduls 3 z.B. durch Bördelung verbundene Anschlußbleche 18 mit abgewinkelten Haltelappen 19 auf, die unmittelbar mit Hilfe der Schrauben 17 am tragenden Rahmen 4 des Funktionsmodul 2 befestigbar sind. Diese Befestigung kann auch am Rahmen 4 beim türseitigen Scharnierteil 13 erfolgen (Fig. 2).

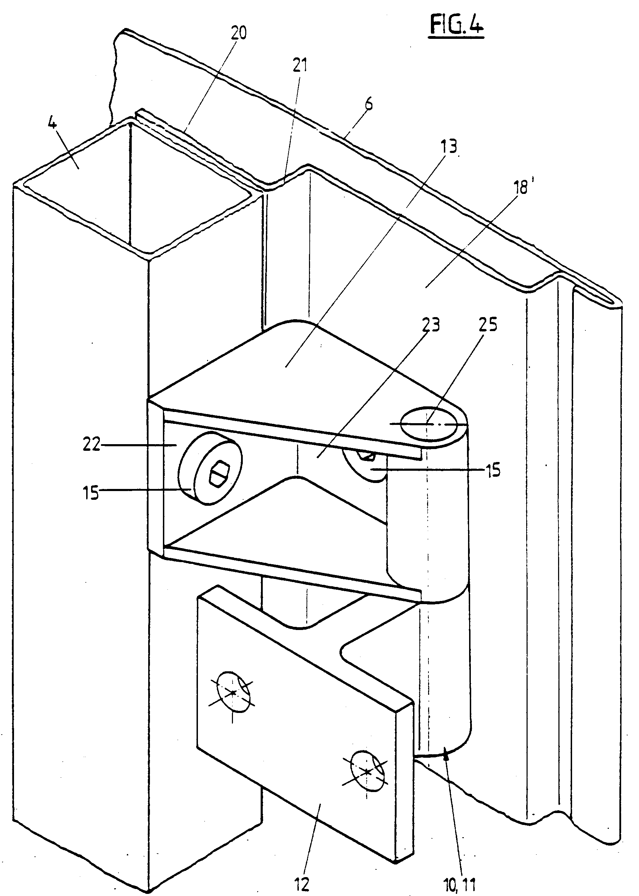

Bei dem in Fig. 4 dargestellten Ausführungsbeispiel fehlt am Anschlußblech 18' ein entsprechender Haltelappen. An seiner Stelle weist das Anschlußblech 18' ein auf der Seite der Außenhaut 6 am Rahmen 4 anliegendes Anlageblech 2o auf. Eine Abkröpfung 21 verbindet das Anlageblech 2o mit dem Anschlußblech 18' (Fig. 4).

Das Funktionsmodul 2 und/oder das Außenmodul 3 sind an dem/den türseitigen Scharnierteilen 13 des/der Scharniere 1o, 11 justierbar. Hierzu dienen Beilegscheiben und Zwischenbleche, die in den Figuren nicht dargestellt sind und in grundsätzlich bekannter Form verwendet werden.

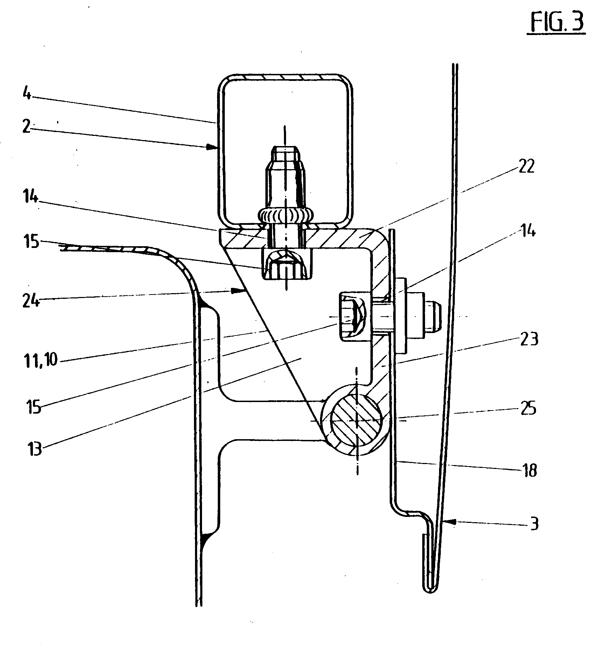

Die an den türseitigen Scharnierteilen 13 vorgesehenen Befestigungsmittel 14 zum getrennten Befestigen des Funktionsmoduls 2 und des Außenmoduls 3 sind bei den dargestellten Ausführungsbeispielen jeweils Durchtrittsöffnungen für die Schrauben 15. Diese Durchtrittsöffnungen bzw. Befestigungsmittel 14 befinden sich bei dem in den Fig. 2 - 4 dargestellten Ausführungsbeispiel in den winklig zueinander stehenden Schenkeln 22, 23 eines als Winkelstück 24 gestalteten, türseitigen Scharnierteiles 13. Die Lage der Drehachsen 25 der Scharniere 1o, 11 kann beliebig sein und befindet sich gemäß Ausführungsbeispiel am Ende des einen Schenkels 23.

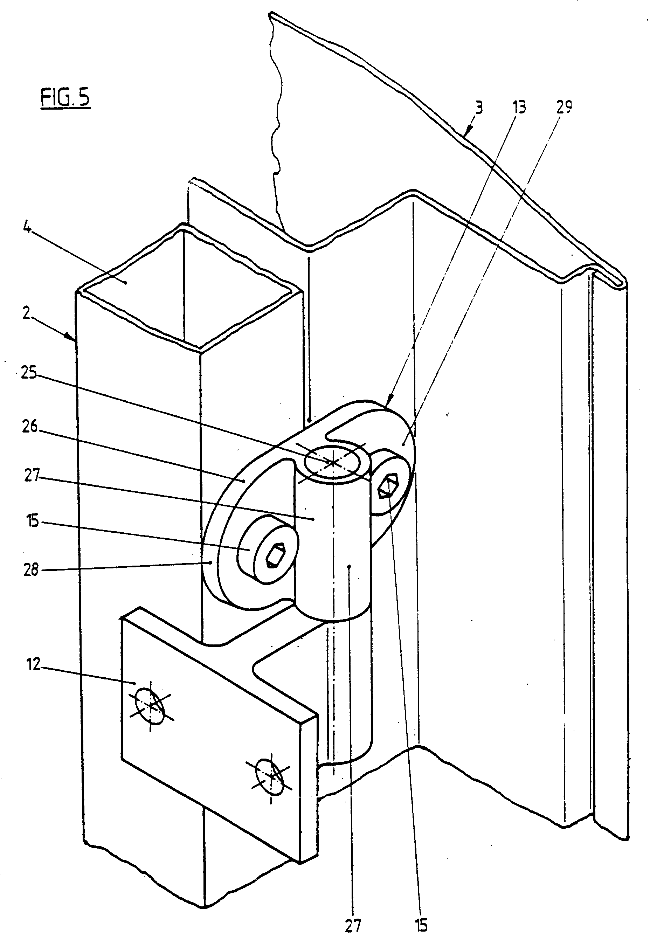

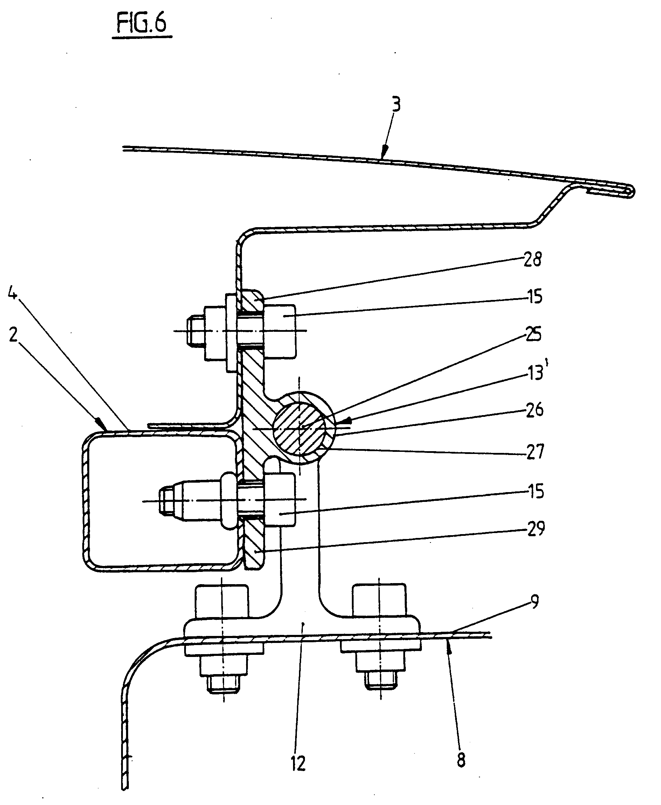

Das in den Figuren 5 und 6 dargestellte Ausführungsbeispiel unterscheidet sich von den zuerst beschriebenen Ausführungsbeispielen vor allem durch die Form und Gestalt des türseitigen Scharnierteiles 13'. Dieses Scharnierteil 13' ist ein T-Stück 26 mit einer Aufnahme 27 für die Drehachse 25, wobei ferner die beiden zur getrennten Befestigung des Funktionsmoduls 2 und des Außenmoduls 3 dienenden Schenkel 28 und 29 z.B. in einer Ebene liegen (Fig. 6). Aber auch die Anordnung in einer Ebene ist nicht zwingend notwendig. Sowohl die in den Figuren im Querschnitt T-förmig dargestellten, karosserieseitigen Scharnierteile 12 als auch die türseitigen Scharnierteile 13 können eine den jeweiligen Anforderungen entsprechende Form und Gestalt besitzen. Wesentlich ist, daß die Möglichkeit besteht, die in ein Funktionsmodul 2 und in ein Außenmodul 3 aufgeteilte Tür 1 entsprechend ihren Modulen getrennt an den Scharnieren 1o, 11 befestigen und auch getrennt wieder lösen zu können.

## Patentansprüche

1. Kraftfahrzeugtür mit einem Funktionsmodul (2), das einen tragenden Rahmen (4) und der Türfunktion entsprechende Einbauteile (5) aufweist, und mit einem Außenmodul (3), das die Türaußenhaut (6) und Befestigungsteile (7) zum Verbinden mit dem Rahmen (4) aufweist, wobei der Rahmen (4) lösbar mit türseitigen Scharnierteilen (13) verbindbar ist, die zusammen mit Karosseriescharnierteilen (12) Türscharniere (10, 11) bilden, mit denen zugleich das Außenmodul (3) an ein tragendes Teil (9) der Karosserie (8) anlenkbar ist, dadurch gekennzeichnet, daß das Außenmodul (3) und das Funktionsmodul (2) jeweils für sich sowie getrennt lösbar mit gemeinsamen, türseitigen Scharnierteilen (13) verbindbar sind.

2. Kraftfahrzeugtür nach Anspruch 1, dadurch gekennzeichnet, daß das Funktionsmodul (2) und /oder das Außenmodul (3) an wenigstens einem der türseitigen Scharnierteile (13) der Scharniere (10, 11) justierbar sind.

3. Kraftfahrzeugtür nach mindestens einem der vorhergehenden Ansprüche, dadurch gekennzeichnet, daß das Funktionsmodul (2) und/oder das Außenmodul (3) mittels Schrauben (15) lösbar mit den türseitigen Scharnierteilen (13) verbindbar sind.

4. Kraftfahrzeugtür nach mindestens einem der vorhergehenden Ansprüche, dadurch gekennzeichnet, daß das Außenmodul (3) insbesondere mittels Schrauben (16) lösbar zugleich mit dem Funktionsmodul (2) verbindbar ist.

5. Kraftfahrzeugtür nach mindestens einem der vorhergehenden Ansprüche, dadurch gekennzeichnet, daß die türseitigen Scharnierteile (13, 13') jeweils mindestens zwei unabhängige Befestigungsmittel (14) für das Funktionsmodul (2) und für das Außenmodul (3) aufweisen.

6. Kraftfahrzeugtür nach mindestens einem der vorgehenden Ansprüche, dadurch gekennzeichnet, daß die Befestigungsmittel (14) jeweils Durchtrittsöffnungen für Schrauben (15) sind.

7. Kraftfahrzeugtür nach mindestens einem der vorhergehenden Ansprüche, dadurch gekennzeichnet, daß das türseitige Scharnierteil (13) ein Winkelstück (24) mit zwei Schenkeln (22, 23) ist, die zum Verbinden mit dem Funktionsmodul (2) bzw. mit dem Außenmodul (3) dienen.

8. Kraftfahrzeugtür nach mindestens einem der vorhergehenden Ansprüche, dadurch gekennzeichnet, daß das türseitige Scharnierteil (13') ein T-Stück (26) ist, dessen Steg die Scharnierhülse (27) aufweist und dessen auf gegenüberliegenden Seiten des Steges angeordnete Schenkel (28, 29) der Verbindung mit dem Funktionsmodul (2) einerseits und mit dem Außenmodul (3) andererseits dienen.

## Claims

1. A motor vehicle door comprising a functional module (2) which has a supporting frame (4) and fitments (5) corresponding to the door function, and an outer module (3) which has the outer door skin (6) and fixing portions (7) for connection to the frame (4), wherein the frame (4) can be releasably connected to hinge members (13) on the door side, which together with bodywork hinge members (12) form door hinges (10, 11) with which at the same time the outer module (3) can be pivotally connected to a supporting part (9) of the bodywork (8), characterised in that the outer module (3) and the functional module (2) can each be connected in itself and separately releasably to common hinge members (13) on the door side.

2. A motor vehicle door according to claim 1 characterised in that the functional module (2) and/or the outer module (3) are adjustable at at least one of the hinge members (13), at the door side, of the hinges (10, 11).

3. A motor vehicle door according to at least one of the preceding claims characterised in that the functional module (2) and/or the outer module (3) are connected releasably by means of screws (15) to the hinge members (13) at the door side.

4. A motor vehicle door according to at least one of the preceding claims characterised in that the outer module (3) can be releasably connected at the same time to the functional module (2) in particular by means of screws (16).

5. A motor vehicle door according to at least one of the preceding claims characterised in that the hinge members (13, 13') at the door side each have at least two independent fixing means (14) for the functional module (2) and for the outer module (3).

6. A motor vehicle door according to at least one of the preceding claims characterised in that the fixing means (14) are respectively through openings for screws (15).

7. A motor vehicle door according to at least one of the preceding claims characterised in that the hinge member (13) at the door side is an angle portion (24) with two limbs (22, 23) which serve for connection to the functional module (2) and to the outer module (3) respectively.

8. A motor vehicle door according to at least one of the preceding claims characterised in that the hinge member (13') at the door side is a T-shaped portion (26) whose web has the hinge sleeve (27) and whose limbs (28, 29), which are arranged on opposite sides of the web, serve for connection to the functional module (2) on the one hand and to the outer module (3) on the other hand.

## Revendications

1. Portière de véhicule automobile, comprenant un module de fonction (2) qui présente un cadre porteur (4) et des pièces encastrées (5) correspondant au fonctionnement de la porte, et un module externe (3) qui présente l'enveloppe externe de porte (6) et des pièces de fixation (7) pour la liaison avec le cadre (4), le cadre (4) pouvant être relié de manière amovible aux pièces de charnière (13), côté portière, qui forment ensemble avec les pièces de charnière de carrosserie (12), des charnières de porte (10, 11), à l'aide desquelles le module externe (3) peut être en même temps articulé à une partie porteuse (9) de la carrosserie (8), caractérisée en ce que le module externe (3) et le module de fonction (2) peuvent être reliés de manière amovible, respectivement, en soi ou séparément, aux pièces de charnière communes (13), côté porte.

2. Portière de véhicule automobile selon la revendication 1, caractérisée en ce que le module de fonction (2) et/ou le module externe (3) sont ajustables sur au moins l'une des pièces de charnière (13), côté portière, de la charnière (10, 11).

3. Portière de véhicule automobile selon au moins l'une des revendications précédentes, caractérisée en ce que le module de fonction (2) et/ou le module externe (3) peuvent être reliés de manière amovible, par vis (15), aux pièces de charnière (13), côté portière.

4. Portière de véhicule automobile selon au moins l'une des revendications précédentes, caractérisée en ce que le module externe (3) peut être relié, de manière amovible, en même temps au module de fonction (2), en particulier au moyen de vis (16).

5. Portière de véhicule automobile selon au moins l'une des revendications précédentes, caractérisée en ce que les pièces de charnière (13, 13'), côté portière, présentent respectivement au moins deux moyens de fixation indépendants (14) pour le module de fonction (2) et pour le module externe (3).

6. Portière de véhicule automobile selon au moins l'une des revendications précédentes, caractérisée en ce que les moyens de fixation (14) sont des ouvertures de passage pour les vis (15).

7. Portière de véhicule automobile selon au moins l'une des revendications précédentes, caractérisée en ce que la partie de charnière (13), côté portière, est un coude (24) à deux côtés (22, 23) qui servent à relier le module de fonction (2) au module externe (3) respectivement.

8. Portière de véhicule automobile selon au moins l'une des revendications précédentes, caractérisée en ce que la partie de charnière (13'), côté portière, est une pièce en T (26) dont la barre présente la douille de charnière (27) et dont les côtés (28, 29), disposés sur les faces opposées de la barre, servent à la liaison, d'une part, avec le module de fonction (2) et, d'autre part, avec le module externe (3).
